# EUROPÄISCHE PATENTANMELDUNG

(11) **EP 4 086 232 A1**
(43) Veröffentlichungstag der Anmeldung: **09.11.2022**
(21) Anmeldenummer: 22165804.0
(22) Anmeldetag: 31.03.2022
(51) Int. Cl.: C04B 33/04, C04B 33/132, C04B 33/22, C04B 33/32

(54) **ROHSTOFFZUSAMMENSETZUNG**

(30) Priorität: 04.05.2021 DE 102021111484
(71) Anmelder: Wilhelm Geiger GmbH & Co. KG, 87561 Oberstdorf (DE)
(72) Erfinder: HOFFMANN, Severin, 89171 Illerkirchberg (DE); SCHMID, Florian, 87538 Obermaiselstein (DE)
(74) Vertreter: Samson & Partner Patentanwälte mbB

(57) **Zusammenfassung**

Rohstoffzusammensetzung umfassend eine Suspension, wobei die Suspension Bentonit umfasst und Ziegelmehl, sowie ein Verfahren zur Herstellung einer Rohstoffzusammensetzung, einen Ziegel, umfassend eine Rohstoffzusammensetzung sowie ein Verfahren zur Herstellung eines Ziegels umfassend eine Rohstoffzusammensetzung.

## Beschreibung

### GEBIET DER ERFINDUNG

Die vorliegende Erfindung bezieht sich im Allgemeinen auf das Gebiet der Rohstoffe und insbesondere auf eine Rohstoffzusammensetzung, ein Verfahren zur Herstellung einer Rohstoffzusammensetzung, einen Ziegel umfassend eine Rohstoffzusammensetzung sowie ein Verfahren zur Herstellung eines Ziegels umfassend eine Rohstoffzusammensetzung.

### HINTERGRUND DER ERFINDUNG/STAND DER TECHNIK

Ziegelstaub oder Ziegelmehl entsteht bei der Herstellung von Planziegeln, bei dem Ziegelsteine auf die gleichen Maße geschliffen werden. Der anfallende Ziegelstaub wird entsorgt.

Bentonitsuspensionen werden z.B. im Bergbau bei Bohrspülungen eingesetzt und müssen ebenfalls (z.B. nach mehrmaliger Verwendung) entsorgt werden. Die Entsorgung in Deponien ist aufwändig und/oder zeit- und/oder kostenintensiv.

### AUFGABENSTELLUNG

Der vorliegenden Erfindung liegt die Aufgabe zugrunde, zuvor nicht verwendbaren/verwertbaren Ziegelstaub und zuvor nicht verwendbare/verwertbare Bentonitsuspension erneut nutzbar zu machen und eine Rohstoffzusammensetzung, z.B. für einen Ziegel, mit verbesserten physikalischen Eigenschaften bereitzustellen.

### KURZBESCHREIBUNG DER ERFINDUNG

Diese Aufgabe wird gelöst durch Gegenstände gemäß der unabhängigen Patentansprüche. Die abhängigen Ansprüche beschreiben bevorzugte Ausführungsformen.

Ein erfindungsgemäße Rohstoffzusammensetzung umfasst eine Suspension, wobei die Suspension Bentonit und Ziegelmehl umfasst.

Unter einer "Rohstoffzusammensetzung" kann eine Zusammensetzung, ein Gemisch oder ein Gemenge aus beispielsweise zwei Stoffen, Substanzen und/oder Materialien verstanden werden. Zusätzlich kann eine Rohstoffzusammensetzung auch eine oder mehrere Flüssigkeiten, z.B. Wasser, umfassen.

Ein Gemisch kann ein homogenes Gemisch sein, bei dem die Komponenten an jedem Ort innerhalb des Volumens, dass das homogene Gemisch einnimmt, dieselbe Konzentration aufweist. Ein Gemisch kann ein heterogenes Gemisch sein, bei dem die Bereiche unterschiedliche stoffliche Zusammensetzung aufweisen. Die Verteilung der Materialien und/oder Stoffe in einer Zusammensetzung kann auch zufällig sein.

Eine erfindungsgemäße Rohstoffzusammensetzung kann derart vermengt werden, dass es im Wesentlichen eine gleichmäßige Konzentration und/oder Verteilung der wenigstens zwei Stoffe, Substanzen und/oder Materialen aufweist.

Ein Zusammensetzung kann zwei oder mehr gleiche/identische Stoffe oder Materialien unterschiedlicher Korn- bzw. Teilchengröße aufweisen, oder zwei oder mehr unterschiedliche Materialien im Wesentlichen gleicher Korn- bzw. Teilchengröße oder Kombinationen daraus. Die Materialien oder Stoffe in einer Zusammensetzung können abgesehen von der Korngröße beispielsweise auch gleiche und/oder unterschiedliche Dichten, chemische Eigenschaften oder andere aufweisen.

Unter einer "Suspension" kann ein Stoffgemisch aus einer Flüssigkeit, beispielweise Wasser und darin verteilten Festkörpern und/oder Feststoffen, beispielsweise Teilchen oder Partikeln, (z.B. Tonmaterialien) verstanden werden.

Suspensionen können z.B. mittels ihrer Teilchengröße unterteilt bzw. kategorisiert werden. Beispielsweise kann eine "grobe" Suspension eine Teilchengröße 0,1 mm bis 1 mm aufweisen, z. B. Kreideschlamm und "feine" Suspension eine Teilchengröße 1 µm bis 100 µm, z. B. Kalkmilch. Noch feinere Suspensionen, beispielsweise mit einer Teilchengröße von kleiner als 1 µm können als "Dispersionen" bezeichnet werden und Suspensionen mit einer Teilchengröße kleiner als 1 nm können als "Molekulardispersionen" bezeichnet werden.

Die Suspension der erfindungsgemäßen Rohstoffzusammensetzung kann ein Gemisch aus Wasser und Bentonit sein. In dieser Offenbarung können die Begriffe "Bentonit-Suspension" und "Suspension, die Bentonit umfasst" austauschbar verwendet werden.

Bentonit kann eine Mischung aus Tonmineralen und/oder Schichtsilikaten sein.

Die Begriffe "Tonminerale" und "Schichtsilikate" können hierin auch austauschbar verwendet werden, da einige Schichtsilikate zu den Tonmineralen gehören und/oder Tonminerale auch Schichtsilikate umfassen können. Der Begriff Tonminerale bezeichnet meist Minerale, die eine Korngröße von < 2 µm aufweisen. Die Definitionen können sich also überschneiden. Es gibt jedoch Fälle, in denen diese Begriffe nicht deckungsgleich sind, beispielsweise bei Goethit oder Gibbsit, welche keine Silikate sind, oder für Schichtsilikate wie Kaolinit, das größer als zwei Mikrometer ist. Für die Fälle, in denen diese Begriffe jedoch deckungsgleich sind, können die Begriffe auch austauschbar verwendet werden.

Im Folgenden können unter "Schichtsilikaten" Silikate verstanden werden, die einen schichtartigen Aufbau (z.B. eine schichtartige Kristallstruktur aus Silizium, Wasserstoff und meist Magnesium und Aluminium oder auch Natrium etc.) aufweisen, z.B. Zweischichtsilikate oder Dreischichtsilikate. Beispiele für Dreischichtsilikate sind Talk, Pyrophyllit, Muskovit, Illit, Maragrit, Montmorillonit etc.

Im Folgenden kann unter "Tonmineral" ein Material verstanden werden, dass einen einzelnen Ton oder ein einzelnes Mineral umfasst oder mehrere Tone, beispielsweise ein Tongemisch, oder mehrere Minerale umfasst. Wie oben erwähnt, kann ein Tonmineral auch Schichtsilikate bezeichnen und/oder umfassen. Ein Tonmineral kann in Schichten angeordnet sein, z.B. Zweischicht-Tonminerale, wie z.B. Kaolinit oder Chrysotil, Dreischicht-Tonminerale, wie z.B. Illit, Smektit oder Vermicult, oder Vierschicht-Tonminerale, wie z.B. Chlorit, anhand derer die Tonminerale in verschiedene Gruppen klassifiziert werden können.

Beispielsweise können die Tonminerale in die Gruppen: Talk-Pyrophyllit-Gruppe, Smektitgruppe, Vermiculit-Illit Gruppe oder Glimmergruppe etc. eingeteilt werden. Ein Tonmineral kann ein oder mehrere Schichtsilikate umfassen und/oder auch andere Materialien. Bevorzugt ist ein Tonmineral bzw. ein Schichtsilikat der Smektitgruppe, wie beispielsweise Montmorillonit. Die Smektitgruppe kann "quellfähige" Schichtsilikate bzw. Phyllosilikate bezeichnen. Smektite entstehen beispielsweise bei der Verwitterung von Basalt und Gabbro.

Montmorillonit ist ein Mineral, das sich durch seine Quellfähigkeit bei Kontakt mit Wasser auszeichnet. Quellfähigkeit kann dabei die Vergrößerung des Volumens (z.B. des Montmorillonits) bei Kontakt mit Wasser bezeichnen. Montmorillonit kann beispielsweise Wasser in seiner Kristallstruktur binden, wodurch sein Volumen vergrößert werden kann.

Montmorillonit besitzt auch weitere physikalische Eigenschaften wie Ionenaustauschkapazität und Thixotropie. In der Bodenkunde kann Thixotropie eine Verflüssigung (z.B. Sol-Zustand) bei mechanischer Einwirkung und eine Verfestigung (z.B. Gel-Zustand) im Ruhezustand bezeichnen. Dabei kann bei z.B. feinkörnigen, meist schluffigen oder tonigen Sedimenten, ein Wechsel von fest nach flüssig (z.B. durch Erschütterung) mit anschließender Rücckehr in den festen Zustand auftreten. Thixotrop sind beispielsweise Lössböden, Quickerde, Quickton und/oder Treibsand.

Bentonit kann als Hauptanteil oder Hauptbestandteil Montmorillonit umfassen. Unter "Hauptanteil", kann ein Anteil an Montmorillonit von z.B. mehr als 50%, mehr als 60%, mehr als 70%, vorzugsweise mehr als 80% verstanden werden. Bentonit kann auch Begleitmaterialien umfassen, wie beispielsweise Quarz, Glimmer, Zirkon, Turmalin, Feldspat-Minerale, Pyrit oder auch Calcit.

Eine Bentonitsuspension kann beispielsweise hergestellt werden, indem Wasser mit zerkleinertem Bentonit einer gewünschten Korn- bzw. Teilchengröße vermischt wird. Zusätzlich oder Alternativ können auch bereits verwendete oder gebrauchte Bentonitsuspensionen verwendet werden, für die es keine Verwendung gibt, bzw. welche andernfalls entsorgt werden müssten.

Wie oben erwähnt, kann Bentonit Montmorillonit als Hauptbestandteilt umfassen, wodurch es im Erd- oder Bergbau und in der Bohrtechnik eingesetzt werden kann, beispielsweise um das thixotrope Verhalten (Wechsel von fest nach flüssig bei mechanischer Einwirkung) des Montmorillonits zu nutzen.

Im Bergbau- und Bohrtechnik werden beispielsweise Bentonitsuspensionen als Bohrspülungen verwendet. Die Bentonitsuspensionen werden dabei also Fördermedium und/oder als Stützsuspensionen bei (Erd-) Bohrungen, Schlitzwänden oder in ähnlichen Bauwerken verwendet. Während der Erdarbeiten (z.B. Bohrungen) kann die Suspension, z.B. ein Bentonit-Wasser Gemisch in die aktive Bohrung eingespült werden, sodass das Bohrgut in der Suspension nach oben gefördert wird. Ein Bentonit-Wasser-Gemisch ist ein Beispiel für eine Bentonitsuspension. Als Stützmedium in einem Bohrloch oder Schlitzwandschlitz eingesetzt, verhindert diese, das das Erdbauwerk in sich einstürzt oder sich Teile der Wand lösen. Bohrspülungen werden beispielsweise auch benötigt, um die Antriebsleistung sowie die Erhitzung des Bohrwerkzeugs durch Reibungswärme zu reduzieren.

Teilweise werden diese Bentonitsuspensionen wieder aufbereitet, um sie erneut zu verwenden. Dies gelingt aber nur bis zu einem gewissen Grad. Beispielsweise kann die Bentonitsuspension unbrauchbar werden, wenn sich der Feinanteil aus dem Bohrgut in der Suspension angereichert hat. Solche Bentonitsuspension werden also nicht mehr benötigt oder sind für Bohrungen nicht mehr verwendbar und müssen entsorgt werden. Die Entsorgung in Deponien ist aufwändig und/oder zeit- und/oder kostenintensiv. Derartige Bentonitsuspensionen können als "gebrauchte Suspensionen" bezeichnet werden und können in der erfindungsgemäßen Rohstoffzusammensetzung eine neue Verwendung finden.

Die erfindungsgemäße Rohstoffzusammensetzung umfasst auch Ziegelmehl.

Im Folgeneden kann unter "Ziegelmehl" ein Material verstanden werden, dass zerkleinerte keramische Baustoffe umfasst und in einer gewissen Teilchen- bzw. Korngröße vorliegt. Keramische Baustoffe können Gegenstände aus formbaren Erdmaterialien sein, die durch Behandlung mit hohen Temperaturen (z.B. ca. 1000°C) verfestigt wurden. Aus keramischen Materialien können beispielsweise Baustoffe (z.B. Ziegel, Klinker und Fliesen) sowie Gebrauchsgegenstände (z.B. Tonwaren, Porzellan und Steingut) hergestellt werden.

Vorzugsweise umfasst das Ziegelmehl zerkleinertes Ziegelmaterial, z.B. aus gebranntem Ton (z.B. einem Ziegel) gemahlener Sand, Pulver oder Staub. Ziegelstaub oder Ziegelmehl kann beispielsweise bei der Herstellung von Planziegeln entstehen, bei dem Ziegelsteine auf die gleichen Maße geschliffen werden. Der anfallende Ziegelstaub ist meist unbrauchbar und muss kostenaufwändig entsorgt werden.

Das Ziegelmehl kann beispielsweise durch zerkleinern eines Dachziegels, Mauerziegels, Backsteins, Ziegelsteins, Klinkers, Feldbrandziegels, Terrakottas oder eines andere Ziegels oder einer Fassadenverkleidung, Fliesen etc. erhalten werden, welche nicht mehr benötigt werden und entsorgt werden müssten. Es können also gebrauchte und/oder beschädigte bzw. nicht mehr verwertbare Ziegel verwendet werden.

Das zerkleinerte Ziegelmaterial kann einen Korngröße bzw. eine Teilchengröße in einem Bereich bis etwa 2 mm aufweisen und vorzugsweise einen Feinkoranteil von mindestens 60 Massen-% kleiner oder gleich 1mm und/oder mindestens 50 Massen% kleiner oder gleich 0,1mm aufweisen.

Das Ziegelmehl kann als Porosierungsmittel in der Suspension wirken. Als Porosierungsmittel kann ein Material bezeichnet werden, mittels dem Hohlräume, Poren oder Kapillaren erzeugt werden können.

Es kann zwischen organischen Porosierungsmitteln oder Porosierungsstoffen und anorganischen Porosierungsmitteln oder Porosierungsstoffen unterschieden werden.

Organische Porosierungsmittel umfassen beispielsweise Sägemehl, Sägespäne, Polystrol (Styropor), Kohle, Naphtalin, Kokosfasern, Stroh oder Schalen von Sonnenblumenkernen etc.

Anorganische Porosierungsmittel können mineralische Porosierungsmittel sein und können beispielsweise Kieselgur, Kalksteinmehl, Kreide, Mergelton oder Perlite etc. umfassen.

Die Verwendung von Porosierungsmitteln kann eine gezielte Einstellung von Porengröße, Porenvolumen und Porenverteilung, z.B. in einer Suspension, ermöglichen. Ein Porosierungsmittel kann auch als Porenbildner verstanden werden, also z.B. die Erzeugung von Poren oder Hohlräumen in einem Material und/oder einem Gemisch. Beispielsweise können in einem Ziegel, z.B. nach dem Brennen, genau an den Stellen in dem Ziegel Hohlräume zurückbleiben, wo sich das Porosierungsmittel befand.

Porosierungsmittel bzw. die dadurch erzeugten Hohlräume können Einfluss auf physikalische Eigenschaften eines Ziegels haben, wie z.B. Festigkeit, Gewicht bzw. Masse, Dichte (z.B. Scherbenrohdichte), Wärmeleitfähigkeit, Wärmedämmung, Biegezugfestigkeit, sowie Druckfestigkeit oder einen Einfluss auf dessen Trockenverhalten.

Das Ziegelmehl kann in der Suspension als Porosierungsmittel wirken und so einen Wasseranteil der Suspension binden, wodurch der Suspension Wasser entzogen wird. Es kann auch die Abgabe von Wasser an die Umgebung begünstigen.

Das Ziegelmehl kann in der Bentonitsuspension auf zwei Arten als Porosierungsmittel wirken und Poren bilden.

Einerseits sind in dem Ziegel selbst (also dem Ausgangsmaterial des Ziegelmehls vor dem Zerkleinern) bereits Poren, Kapillaren oder Hohlräume enthalten. Dies liegt daran, dass bei der Herstellung von Ziegeln ebenfalls Porosierungsmittel verwendet bzw. eingesetzt werden, die in dem Ziegel (z.B. beim Brennen) Poren bzw. Kapillaren oder Hohlräume erzeugt haben. Wird ein (z.B. gebrauchter oder kaputter) Ziegel zu Ziegelmehl zerkleinert, so verbleiben diese Poren, Kapillaren oder Hohlräume in dem zerkleinerten Ziegelmaterial, also den Teilchen bzw. Körnern des Ziegelmehls. Wenn das Ziegelmehl der Bentonitsuspension zugegeben wird, werden somit auch automatisch die in dem Ziegelmehl enthaltenen Poren, Kapillaren oder Hohlräume zugegeben, wodurch in der Bentonitsuspension ebenfalls Poren, Kapillaren oder Hohlräume erzeugt werden.

Andererseits (z.B. zusätzlich oder alternativ) können die Teilchen, Körner oder Partikel des Ziegelmehls in der Bentonitsuspension als Porosierungsmittel wirken. Wenn also für die erfindungsgemäße Rohstoffzusammensetzung Ziegelmehl mit der Bentonitsuspension vermengt wird, erzeugen die Teilchen, Körner oder Partikel des Ziegelmehls in der Bentonitsuspension Hohlräume, z.B. wenn ein Ziegel aus der erfindungsgemäßen Rohstoffzusammensetzung gebrannt wird.

Diese beiden Varianten können also kombiniert werden. So kann beispielsweise eine große Anzahl an Poren realisiert werden, wodurch sich vorteilhafte Auswirkungen auf physikalische Eigenschaften eines Ziegels ergeben, der aus einer erfindungsgemäßen Rohstoffzusammensetzung hergestellt wird, wie z.B. Festigkeit, Gewicht oder seine Masse, Dichte (z.B. Scherbenrohdichte), Wärmeleitfähigkeit, Wärmedämmung, Biegezugfestigkeit, sowie Druckfestigkeit.

Die Feinheit und die hohe Anzahl an Poren und Kapillaren erzeugen eine große Oberfläche und verursachen ein hygroskopisches Verhalten des Ziegelmehls, wodurch Feuchtigkeit, z.B. Wasser, gebunden und/oder aufgenommen werden kann. Das Ziegelmehl hat somit auch Einfluss auf Trocknungseigenschaften des Ziegels.

Das Ziegelmehl kann als anorganisches Porosierungsmittel behandelt werden.

Die erfindungsgemäße Rohstoffzusammensetzung kann die Bentonitsuspension und das Ziegelmehl vorzugsweise in einem Verhältnis von in etwa 1:1 umfassen.

Werden die Bentonitsuspension und das Ziegelmehl vorzugsweise in einem Verhältnis von in etwa 1:1 vermischt oder vermengt, so kann das Ziegelmehl der Bentonitsuspension Wasser entziehen oder einen Wasseranteil binden, wodurch die erfindungsgemäße Rohstoffzusammensetzung von einer im Wesentlichen flüssigen Konsistenz zu einer im Wesentlichen festen Konsistenz wechselt. Konsistenz kann die Beschaffenheit z.B. feinkörniger, Böden in Abhängigkeit vom Wassergehalt bezeichnen.

Allgemein können vier Konsistenzbereiche oder Konsistenzgrenzen unterschieden werden, z.B.: fest (z.B. "trockener Boden"), halbfest, plastisch (z.B. steif, weich, breiig oder leicht verformbar) und flüssig (z.B. zähflüssig).

Die Grenzen zwischen den Konsistenzbereichen können als Konsistenzgrenzen bezeichnet werden, z.B. die Schrumpfgrenze "shrinking limit (wS)", die Ausrollgrenze "plastic limit (wP)" und die Fließgrenze "liquid limit (wL)". Sie sind auch als "Atterberg'sche" Grenzen oder Zustandsgrenzen nach Atterberg bekannt und werden in der Norm DIN 18122 definiert.

Beispielsweise kann sich an der Schrumpfgrenze der Boden am Übergang vom festen in den halbfesten Zustand befinden. Die Ausrollgrenze kann den Übergang des Bodens vom halbfesten in den steifen Zustand und die Fließgrenze den Übergang vom breiigen in den flüssigen Zustand beschreiben. An jeder Konsistenzgrenze kann der Boden einen Grenzwassergehalt aufweisen.

Die Wassergehalts-Differenz wL-wP ist die Plastizitätszahl. Der Quotient (wL-w)/(wL-wP) bildet die Konsistenzzahl, wobei w der natürliche Wassergehalt ist.

Für die erfindungsgemäße Rohstoffzusammensetzung ist eine Konsistenz mit einer Konsistenzzahl von mehr als in etwa 0,5 bevorzugt. Eine derartige Konsistenz kann beispielsweise als "stichfest" bezeichnet werden und kann sich zum Formen von Ziegeln aus der erfindungsgemäßen Rohstoffzusammensetzung eignen.

Die Aktivitätszahl kann verwendet werden, um die Aktivität von Tonmineralen zu beschreiben. Sie kann das Verhältnis der Plastizitätszahl zum Massenanteil der Körnung kleiner oder gleich 0,002 mm, also z.B. "bindiger" Boden, beschreiben. Zur Berechnung kann der Aktivitätszahl kann A=Ip^{∗}md/mdT verwendet werden, wobei Ip die Plastizitätszahl, mdT eine Trockenmasse des Probenanteils <= 0,002 mm ist und md eine Trockenmasse des Probenanteils <= 0,4 mm ist.

Es können drei Bereiche unterschieden werden: Wenn die Aktivitätszahl kleiner 0,75 ist, kann es sich z.B. um inaktiven Ton handeln, bei einer Aktivitätszahl zwischen 0,75 und 1,25 kann es sich um normalen Ton handeln und bei einem Wert von 1,25 kann es sich um aktivem Ton handeln.

Für die erfindungsgemäße Rohstoffzusammensetzung ist eine Aktivitätszahl von mehr als in etwa 0,5 bevorzugt.

Ferner ist ein Verfahren zur Herstellung einer erfindungsgemäßen Rohstoffzusammensetzung, beschrieben, umfassend: Vermengen einer Suspension, die Bentonit umfasst mit Ziegelmehl.

Die Bentonitsuspension und das Ziegelmehl können in einem ersten Schritt vermengt werden, beispielsweise in einem Verhältnis von in etwa 1:1. Dieses Verhältnis kann auch in Prozent angegeben werden, z.B. in etwa 50% Bentonitsuspension und in etwa 50% Ziegelmehl. Abweichungen von diesem Verhältnis sind ebenfalls möglich, beispielsweise in etwa 60% Bentonitsuspension und in etwa 40% Ziegelmehl, in etwa 70%, Bentonitsuspension und in etwa 30% Ziegelmehl, in etwa 60% Ziegelmehl und in etwa 40% Bentonitsuspension, in etwa 70% Ziegelmehl und in etwa 30% Bentonitsuspension etc. Es kann auch ein Mindestgehalt von in etwa 20% Ziegelmehl verwendet werden und/oder die Konsistenzzahl der Rohstoffzusammensetzung in etwa größer als 0,5 sein.

Während des Vermengens, kann das Ziegelmehl der Bentonitsuspension Wasser entziehen, sodass dieses in der Suspension als anorganisches Porosierungsmittel wirken kann.

Der Schritt des Vermengens kann für die Dauer eines ersten Zeitraums durchgeführt werden, z.B. 30 min, 1h, 2h etc. oder beispielsweise solange, bis die erfindungsgemäße Rohstoffzusammensetzung die gewünschte Konsistenz erreicht hat und/oder bis sich die Bentonitsuspension mit dem Ziegelmehl z.B. homogen oder gleichmäßig vermischt hat.

Nach dem Vermengen kann die erfindungsgemäße Rohstoffzusammensetzung in Formen verschiedener Größe gegeben werden, um beispielsweise einen Ziegel zu formen. Die erfindungsgemäße Rohstoffzusammensetzung kann sich aufgrund der, z.B., stichfesten Konsistenz, leicht formen lassen.

Anschließend kann die erfindungsgemäße Rohstoffzusammensetzung, welche beispielsweise zu einem Ziegel geformt wurde, bei einer Temperatur zwischen etwa 750°C und 1200°C für die Dauer eines zweiten Zeitraums, beispielsweise 10h, 20h etc. erwärmt werden, oder z.B. bis der Ziegel ausgehärtet ist. Dieser Vorgang kann auch als "Brennen" bezeichnet werden. Das Ziegelmehl kann in der Bentonitsuspension Hohlräume in dem fertigen bzw. gebrannten Ziegel erzeugen und so als Porosierungsmittel wirken.

Der durch das erfindungsgemäße Verfahren hergestellte Ziegel und/oder ein Ziegel welcher eine erfindungsgemäße Rohstoffzusammensetzung umfasst ("erfindungsgemäßer Ziegel"), weißt vorteilhafte physikalische Eigenschaften gegenüber herkömmlichen Ziegeln auf.

Beispielsweise kann der erfindungsgemäße Ziegel, eine gegenüber herkömmlichen Ziegeln verhältnismäßig geringere Dichte aufweisen, wodurch z.B. die Scherbenrohdichte des erfindungsgemäßen Ziegels geringer ist. Als Scherbenrohdichte kann die Masse des getrockneten Ziegels, bezogen auf das Scherbenvolumen (äußeres Volumen abzüglich des Volumens der Lochkanäle, Mörteltaschen und Griffhilfen) bezeichnet werden. Dies kann beispielsweise an dem Ziegelmehl liegen, das als Porosierungsmittel in der Bentonitsuspension wirkt. Wie oben beschrieben werden so die bereits existierenden Hohlräume in den Teilchen des Ziegelmehls genutzt und/oder das Ziegelmehl wirkt in der Bentonitsuspension selbst als anorganisches Porosierungsmittel. Insgesamt können durch die Zugabe von Ziegelmehl zu der Bentonitsuspension eine große Anzahl an Hohlräume erzeugt werden, wodurch die Dichte im Vergleich zu gewöhnlichen Ziegeln verringert bzw. reduziert ist.

Eine verringerte Dichte und/oder Scherbenrohdichte hat ebenfalls zur Folge, dass die Masse des erfindungsgemäßen Ziegels abnimmt. Der erfindungsgemäße Ziegel ist also leichter und kann sich beispielsweise als Leichtbaustoff und/oder für den Leichtbau eignen, z.B. als Leichtbauziegel.

Ebenfalls kann der erfindungsgemäße Ziegel eine verbesserte Wärmedämmung aufweisen. Seine spezifische Wärmeleitfähigkeit oder Wärmeleitzahl λ kann gegenüber gewöhnlichen Ziegeln deutlich verbessert sein, z.B. kleiner.

Die spezifische Wärmeleitfähigkeit oder Wärmeleitzahl λ eines Materials ist ein quantitatives Maß für seine Fähigkeit, Energie in Form von Wärme zu leiten. Sie wird angegeben in der Einheit W/mK. Der Wärmefluss wird dabei umso stärker, je größer die Wärmeleitzahl λ ist.

Der erfindungsgemäße Ziegel kann die Wärmeleitzahl λ z.B. erniedrigen und somit besser isolieren. Somit eignet sich der erfindungsgemäße Ziegel zur Wärmedämmung bzw. als Wärmedämmziegel.

Ebenfalls kann der erfindungsgemäße Ziegel ein verbessertes Trocknungsverhalten aufweisen. Die Mischung aus Bentonitsuspension kann den Trocknungsprozess eines "grünen" (z.B. ungebrannten) Ziegels gleichmäßiger, schneller und schonender werden lassen. Dieser kann daher mit weniger Schwindung (d.h. Volumenverringerung) trocknen. Dies liegt an dem Mineral Montmorillionit das als Hauptbestandteil in der Bentonitsuspension vorliegt und, wie zuvor erwähnt, eine hohe Quellfähigkeit aufweist, d.h. Wasseraufnahme in dessen Kristallstruktur ermöglicht. Das Wasser kann also in der Kristallstruktur gebunden werden, was sich auf das Trocknungsverhalten auswirkt.

Ebenfalls kann der erfindungsgemäße Ziegel eine verbesserte, beispielsweise erhöhte, Druckfestigkeit und/oder Biegezugfestigkeit aufweisen. Die Druckfestigkeit gibt an, wie widerstandsfähig ein Stein oder Ziegel bei Einwirken von Druckkräften ist. Übersteigt die Druckspannung die Druckfestigkeit des Steins oder Ziegels, so wird er zerstört. Die Druckfestigkeit wird als Kraft pro Fläche [N/mm²] dargestellt. Biegezugfestigkeit ist eine Zug- oder Druckspannung, die bei Belastung durch ein Biegemoment (Durchbiegung) auftritt und zu plastischer Verformung oder Bruch des Bauteils führt.

### KURZBESCHREIBUNG DER ZEICHNUNGEN

Ausführungsbeispiele der Erfindung werden nun unter Bezugnahme auf die beigefügte Zeichnung beschrieben.

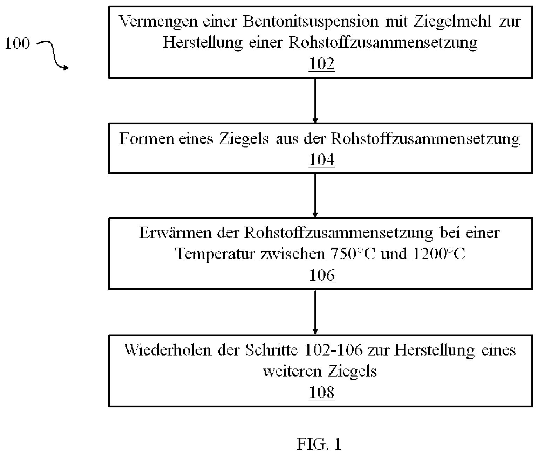

Fig. 1 zeigt ein erfindungsgemäßes Verfahren zur Herstellung eines erfindungsgemäßen Ziegels aus einer erfindungsgemäßen Rohstoffzusammensetzung.

### BESCHREIBUNG BEVORZUGTER AUSFÜHRUNGSFORMEN

Im Folgenden soll die Erfindung anhand von in den Zeichnungen dargestellten Ausführungsformen näher erläutert werden.

Fig. 1 zeigt ein beispielhaftes erfindungsgemäßes Verfahren 100 zur Herstellung eines erfindungsgemäßen Ziegels aus einer erfindungsgemäßen Rohstoffzusammensetzung.

In einem ersten Schritt 102 kann eine Suspension, die Bentonit umfasst mit Ziegelmehl vermengt oder vermischt werden, um einer erfindungsgemäße Rohstoffzusammensetzung zu erzeugen bzw. herzustellen.

Die Bentonitsuspension und das Ziegelmehl können, beispielsweise in einem Verhältnis von in etwa 1:1 vermengt werden. Dieses Verhältnis kann auch in Prozent angegeben werden, z.B. in etwa 50% Bentonitsuspension und in etwa 50% Ziegelmehl.

Während des Vermengens, kann das Ziegelmehl in der Bentonitsuspension als anorganisches Porosierungmittel wirken und der Rohstoffzusammensetzung Wasser entziehen, sodass dieses darin als anorganisches Porosierungsmittel wirken kann.

Der Schritt des Vermengens kann für die Dauer eines ersten Zeitraums durchgeführt werden, z.B. 1h, 2h etc. oder beispielsweise solange, bis die erfindungsgemäße Rohstoffzusammensetzung die gewünschte Konsistenz erreicht hat, z.B. eine Konsistenzzahl von mehr als in etwa 0.5 und/oder bis sich die Bentonitsuspension mit dem Ziegelmehl z.B. homogen oder gleichmäßig vermischt hat.

Nach dem Vermengen kann die erfindungsgemäße Rohstoffzusammensetzung in einem nächsten Schritt 104, z.B., in Formen gegeben werden, um beispielsweise einen erfindungsgemäßen Ziegel zu formen. Die erfindungsgemäße Rohstoffzusammensetzung kann aufgrund der, z.B., "stichfesten Konsistenz", leicht formbar sein. Vor dem Brennen kann der geformte erfindungsgemäße Ziegel als "grüner Ziegel" bezeichnet werden.

In einem nächsten Schritt 106, kann die erfindungsgemäße Rohstoffzusammensetzung bei einer Temperatur zwischen etwa 750°C und 1200°C für die Dauer eines zweiten Zeitraums , beispielsweise 10h, 20h etc. erwärmt werden, z.B. bis die Rohstoffzusammensetzung ausgehärtet ist. Dieser Vorgang kann auch als "Brennen" bezeichnet werden und führt zu einem "fertigen", d.h. gebrannten erfindungsgemäßen Ziegel.

In einem weiteren, optionalen Schritt, 108, kann das Verfahren für die Herstellung eines weiteren erfindungsgemäßen Ziegels aus der erfindungsgemäßen Rohstoffzusammensetzung wiederholt werden.

Der durch das erfindungsgemäße Verfahren hergestellte Ziegel und/oder ein Ziegel welcher eine erfindungsgemäße Rohstoffzusammensetzung umfasst kann als "erfindungsgemäßer Ziegel" bezeichnet werden und weißt vorteilhafte/verbesserte physikalische Eigenschaften, wie z.B. verbesserte Wärmeleitfähigkeit/Wärmedämmung, geringere Dichte und/oder Scherbenrohdichte sowie geringere Masse, verbesserte Druckfestigkeit/Biegezugfestigkeit und/oder ein verbessertes Trocknungsverhalten von grünen erfindungsgemäßen Ziegeln im Vergleich zu herkömmlichen Ziegeln auf.

## Patentansprüche

1. Rohstoffzusammensetzung, umfassend:
eine Suspension, wobei die Suspension Bentonit umfasst; und
Ziegelmehl.

2. Rohstoffzusammensetzung nach Anspruch 1, welche die Suspension und das Ziegelmehl in einem Verhältnis von in etwa 1:1 umfasst.

3. Rohstoffzusammensetzung nach einem oder mehreren der vorstehenden Ansprüche, wobei das Ziegelmehl als anorganisches Porosierungsmittel wirkt, einen Wasseranteil der Suspension bindet und der Suspension Wasser entzieht.

4. Rohstoffzusammensetzung nach einem oder mehreren der vorstehenden Ansprüche, wobei das Ziegelmehl zerkleinerte keramische Baustoffe vorzugsweise zerkleinertes Ziegelmaterial umfasst, wobei das Ziegelmehl eine Korngröße in einem Bereich bis etwa 2 mm aufweist.

5. Rohstoffzusammensetzung nach Anspruch 4, wobei das zerkleinerte Ziegelmaterial einen Feinkoranteil von mindestens 60 Massen-% kleiner oder gleich 1mm und mindestens 50 Massen% kleiner oder gleich 0,1mm aufweist.

6. Rohstoffzusammensetzung nach einem oder mehreren der vorherigen Ansprüche, wobei das Bentonit der Suspension eine Mischung aus Tonmineralen und/oder Schichtsilikaten ist und Montmorillonit umfasst.

7. Rohstoffzusammensetzung nach Anspruch 6, wobei die Tonminerale vorzugsweise aus der Smektit-Gruppe sind und als Hauptbestandteil Montmorillonit umfassen.

8. Rohstoffzusammensetzung nach einem oder mehreren der vorherigen Ansprüche, wobei die Rohstoffzusammensetzung eine Konsistenz mit einer Konsistenzzahl/Aktivitätszahl von mehr als in etwa 0,5 aufweist.

9. Verfahren zur Herstellung einer Rohstoffzusammensetzung,
umfassend:
Vermengen einer Suspension, die Bentonit umfasst mit Ziegelmehl.

10. Verfahren nach Anspruch 9, wobei die Suspension und das Ziegelmehl in einem Verhältnis von in etwa 1: 1vermengt werden.

11. Verfahren nach einem oder mehreren der vorstehenden Ansprüche 9-10, wobei der Schritt des Vermengens ferner Vermengen für wenigstens einen ersten Zeitraum umfasst, so dass das Ziegelmehl als anorganischen Porosierungsmittel wirkt, einen Wasseranteil der Suspension bindet und der Suspension Wasser entzieht bis die Rohstoffzusammensetzung eine Konsistenzzahl/Aktivitätszahl von mehr als in etwa 0,5 aufweist.

12. Verfahren zur Herstellung eines Ziegels, umfassend:
Bereitstellen von einer Rohstoffzusammensetzung nach einem oder mehreren der Ansprüche 1-8, und/oder
Herstellen einer Rohstoffzusammensetzung nach dem Verfahren gemäß einem oder mehreren der Ansprüche 9-11, und
Formen des Ziegels aus der Rohstoffzusammensetzung.

13. Verfahren nach Anspruch 12, ferner umfassend:
Erwärmen der geformten Rohstoffzusammensetzung bei einer Temperatur zwischen etwa 750°C und 1200°C.

14. Ziegel, wobei der Ziegel
eine Rohstoffzusammensetzung nach einem oder mehreren der Ansprüche 1 bis 8 umfasst und/oder
nach dem Verfahren nach einem oder mehreren der Ansprüche 12 bis 13 hergestellt ist.

15. Verwendung der Rohstoffzusammensetzung nach einem oder mehreren der Ansprüche 1-8 als Leichtbaustoff und/oder für den Leichtbau und/oder zur Wärmedämmung.

16. Verwendung des Ziegels nach Anspruch 13 als Leichtbauelement insbesondere als Leichtbauziegel und/oder als Wärmedämmziegel.
